# FASCICULE DE BREVET EUROPEEN

(11) **EP 3 448 814 B1**
(45) Date de publication et mention de la délivrance du brevet: **02.06.2021**
(21) Numéro de dépôt: 17723025.7
(22) Date de dépôt: 26.04.2017
(51) Int. Cl.: C02F 1/467

(54) **DISPOSITIF DE TRAITEMENT DE L'EAU POTABLE PAR ELECTROLYSE, NOTAMMENT POUR L'ABREUVAGE DES ANIMAUX ET PROCEDE DE PILOTAGE**
VORRICHTUNG ZUR TRINKWASSERAUFBEREITUNG DURCH ELEKTROLYSE, INSBESONDERE FÜR EINE TIERTRÄNKE UND STEUERUNGSVERFAHREN
DEVICE FOR TREATING DRINKING WATER BY ELECTROLYSIS, IN PARTICULAR FOR ANIMAL WATERING AND CONTROL PROCESS

(30) Priorité: 26.04.2016 FR 1653655
(43) Date de publication de la demande: 06.03.2019
(73) Titulaire: SAS Windwest, 17000 La Rochelle (FR)
(72) Inventeur: KLEIN, Nadège, 85120 Antigny (FR); FERCHAUD, Bruno, 79380 Saint Marsault (FR); LEYSALLE, Stéphane, 17000 La Rochelle (FR)
(74) Mandataire: Aquinov
(86) Numéro de dépôt international: PCT/EP2017/059868
(87) Numéro de publication internationale: WO 2017/186763

(56) Documents cités:
- JP-A- 2016 059 895
- JP-B2- 3 297 828
- US-A1- 2014 124 377
- US-B1- 6 174 419

## Description

La présente invention concerne un dispositif de traitement de l'eau potable par électrolyse, notamment pour l'abreuvage des animaux, selon la revendication 1.

L'invention couvre le procédé de mise en œuvre dudit dispositif comme défini dans la revendication 3.

On sait que l'eau de forage ou l'eau du réseau peut présenter des caractéristiques incomplètement satisfaisantes.

On sait que le traitement par électrolyse de l'eau provoque des changements dans la structure ionique de l'eau et dans l'état énergétique des éléments et des composés qui font partie de la solution aqueuse.

L'activité ionique s'en trouve augmentée et entraîne un fort potentiel d'oxydoréduction.

Cet apport d'énergie contribue à détruire les matières organiques par décomposition et en éliminant la contamination biologique.

Pour réaliser une électrolyse de l'eau, il faut qu'elle soit conductrice et généralement c'est le chlorure de sodium qui est ajouté à cet effet. Les documents JP 3 297828 B2, US 2014/124377 A1 et US 6 174 419 B1 décrivent des dispositifs de traitement de l'eau potable par électrolyse, utilisant une pompe doseuse reliée à un bac de saumure pour ajuster la conductivité de l'eau.

Néanmoins, il serait utile pour la bonne santé des animaux qui consomment cette eau de diminuer le chlorure de sodium à des quantités de l'ordre de 0,5 à 1,0 g/l, voire moins.

Le dispositif comprend une chambre d'électrolyse de l'eau qui doit pouvoir s'adapter automatiquement à toutes les eaux que ce soit celle du réseau ou celle issue de forage, en fonction du débit et des caractéristiques intrinsèques de l'eau.

Le dispositif étant un dispositif industriel, il doit pouvoir être mis en œuvre avec des connaissances limitées pour l'utilisateur et surtout sans avoir à se préoccuper dudit dispositif lors de son fonctionnement.

L'intérêt d'une eau potable de qualité est de la rendre plus appétente auprès des animaux, de ce fait ils en consomment plus et sont mieux drainés. Bien que la consommation de matière nutritive par animal soit diminuée, il a été noté que chaque animal profite plus, si bien que le rendement est amélioré.

Le but de la présente invention est de dissiper une énergie suffisante dans l'eau de façon à obtenir également un effet biocide par libération d'acide hypochloreux qui est un acide faible, instable, en solution.

Le dispositif selon l'invention comprend une chambre d'électrolyse et des moyens de pilotage de ladite chambre.

Le dispositif est maintenant décrit de façon détaillée, suivant un mode de réalisation préférentiel, non limitatif, les dessins annexés permettant d'illustrer ledit dispositif et les différentes figures montrent :
- Figure 1 : une vue d'un dispositif de traitement de l'eau selon la présente invention comprenant une chambre d'électrolyse, interposée sur un réseau de fourniture d'eau potable notamment dans un élevage,
- Figures 2A et 2B : une vue en perspective et en coupe de la chambre d'électrolyse,
- Figure 3 : abaque de la proportionnalité de la puissance émise par rapport au débit,
- Figure 4 : diagramme de l'évolution du chlore libre en fonction de la concentration en chlorure de sodium,
- Figure 5 : production de chlore libre en fonction de l'intensité et de la concentration de chlorures en solution,
- Figure 6 : influence de la concentration en sel sur la production de chlore total en fonction de l'intensité du courant.

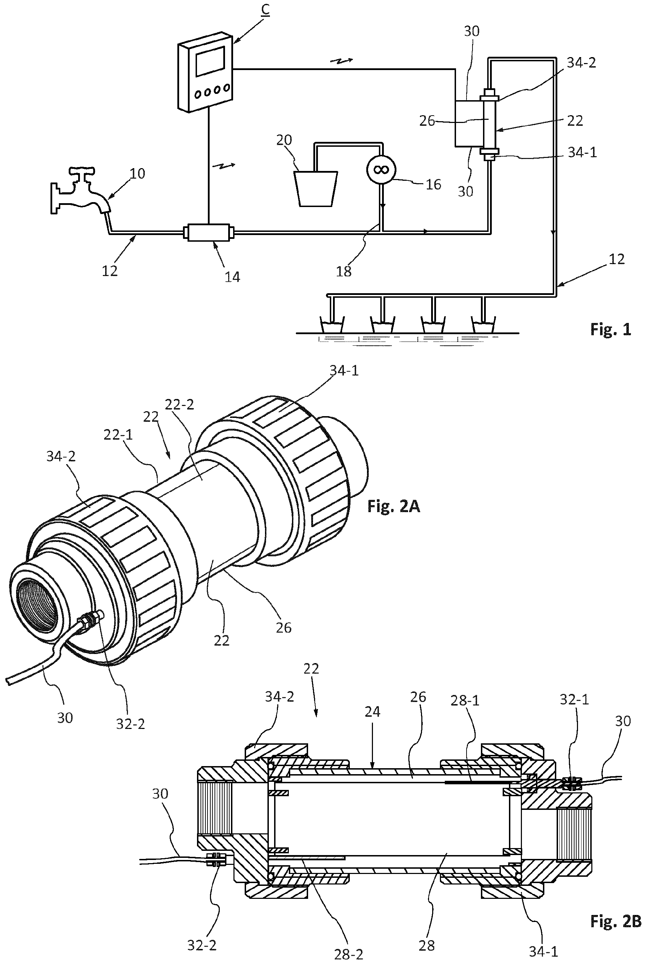

Le dispositif de traitement de l'eau selon la présente invention comprend, comme montré sur la figure 1, une source 10 d'eau provenant du réseau ou d'un forage. Sur la canalisation 12 d'alimentation issue de cette source 10, un débitmètre 14 est interposé, relié à une centrale de pilotage C.

Sur cette même canalisation 12, une pompe doseuse 16 est connectée par un piquage 18, en aval du débitmètre 14.

La pompe doseuse 16 est elle-même reliée à un bac 20 de saumure.

La chambre 22 d'électrolyse selon la présente invention est interposée sur la canalisation 12 en aval du piquage 18. Cette chambre est connectée à la centrale de pilotage C.

En sortie de la chambre 22 d'électrolyse, l'eau peut être distribuée directement dans le cas d'un élevage par exemple comme représenté, ou stockée si nécessaire dans un réservoir tampon.

Cette chambre 22 d'électrolyse comprend un manchon 24, avantageusement en matériau transparent, comprenant au moins une cellule 26 d'électrolyse comprenant au moins un jeu de deux plaques 28 formant l'une 28-1 l'anode et l'autre 28-2 la cathode. Ces plaques 28 sont en matériau conducteur et alimentées par des câbles électriques 30, eux-mêmes reliés à la centrale de pilotage C. Un piquage 32-1, 32-2 étanche permet de faire pénétrer les câbles 30 électriques alimentant l'un, la au moins une plaque 28-1 formant l'anode, et l'autre, la au moins une plaque 28-2 formant la cathode. Ces câbles sont issus de la centrale de pilotage C. Le manchon 24 comporte deux bagues 34-1, 34-2 d'étanchéité vissantes montées sur la canalisation 12 sur laquelle est interposé ledit manchon 24. Des joints 36 assurent les fonctions d'étanchéité de façon connue.

Dans le dispositif, le débitmètre 14 est du type VORTEX distribué par la société KROHNE. Un tel débitmètre donne une indication du débit instantané. Le débitmètre est choisi en fonction du dispositif et notamment des volumes à mesurer, chaque débitmètre ayant une plage de mesures donnée.

La centrale de pilotage C dispose de la valeur du débit instantané au sein de la canalisation 12 et donc du débit à travers la chambre 22 d'électrolyse.

Ce débitmètre est aussi équipé de capteurs permettant de déterminer d'autres paramètres : le pH, la dureté, la température par exemple.

On peut mesurer également la conductivité de l'eau d'alimentation provenant de la source 10 d'eau de façon à connaître la conductance G de l'eau, avant introduction de sel sous forme de saumure par la pompe doseuse 16 à travers le piquage 18, issue du bac 20 de saumure. Ainsi la centrale de pilotage C dispose également de ce paramètre G.

Cette centrale C de pilotage peut émettre une intensité de courant variable, pouvant aller de 2A jusqu'à 24A, pour alimenter les plaques 28 formant l'une 28-1 l'anode et l'autre 28-2 la cathode de la au moins une cellule 26 de façon à générer une valeur de puissance P comprise entre 48 W et 750W.

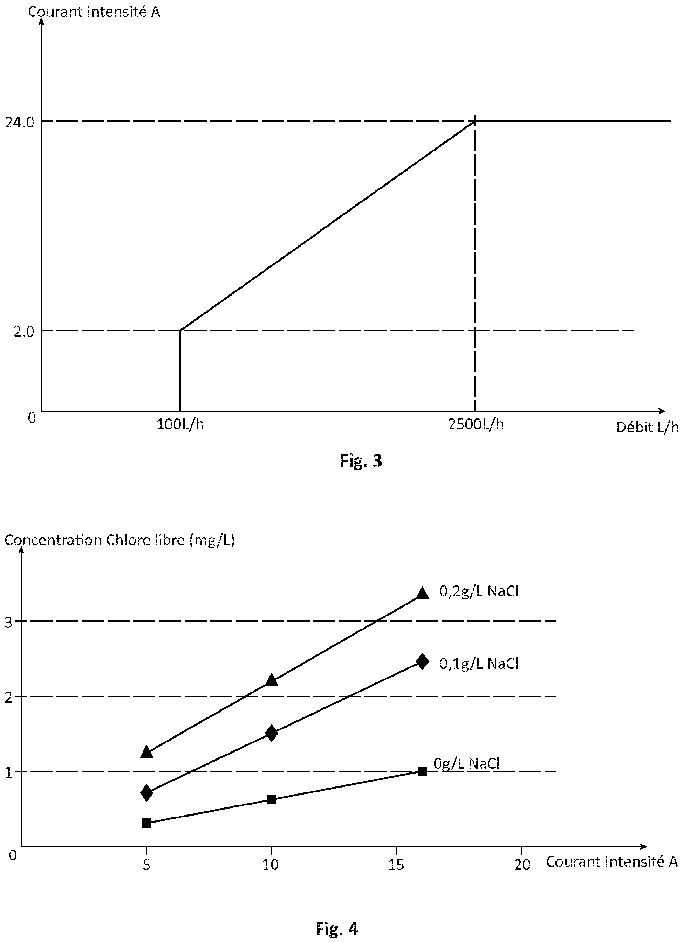

L'intensité de courant, générée par les plaques dans l'eau au sein de la chambre 22 d'électrolyse, est pilotée par la centrale de pilotage C, également en fonction du débit, selon une courbe linéaire objet de la figure 3, en fonction de la valeur de consigne de la puissance nécessaire.

Le courant émis vers les plaques 28 est un courant redressé, haché, à une fréquence efficace de 1kHz ± 10%. Cette fréquence de hachage est suffisante pour traiter toutes les vitesses de circulation de l'eau dans la chambre, c'est-à-dire des vitesses de circulation dans des canalisations domestiques sous des pressions inférieures à 10 bars.

Le procédé selon la présente invention permettant la mise en œuvre dudit dispositif consiste en la succession des étapes suivantes :
- Mesure de la conductance de l'eau de la source,
- Mesure du débit,
- Ajustement de la conductance par injection de chlorure de sodium dans ladite eau,
- Passage dans une chambre d'électrolyse avec émission d'une puissance électrique dans l'eau proportionnellement au débit de façon à assurer un traitement d'oxydoréduction.

L'ajustement de la conductance est effectué en ajustant la quantité de chlorure de sodium pour maintenir une valeur de conductance à une valeur de consigne.

L'ajustement de la puissance par rapport au débit est effectué par variation de l'intensité.

La quantité de chlorure de sodium ajoutée est comprise entre 0,1 et 1 g/l de chlorure de sodium avec une valeur optimale de 0,5 g/l.

Le chlorure de sodium injecté est sous forme de saumure.

Le procédé prévoit de générer la puissance électrique avec du courant haché. Ce courant est haché avec une fréquence de 1kHz à ± 10%.

On constate en mettant en œuvre le procédé selon la présente invention avec le dispositif selon la présente invention l'obtention des résultats expérimentaux suivants concernant :
- Potentiel redox,
- pH, conductivité, température,
- Chlore libre,
- Chlore total,
- Concentrations en ions chlorure, et
- Ozone, présence d'H₂O₂.

Le potentiel redox est mesuré avec une électrode de platine par rapport à une électrode de référence.

Le potentiel est alors mesuré en millivolts, ce qui peut permettre de déterminer le potentiel Redox de la solution saline, ce potentiel mesuré étant lié au couple redox Cl⁻/HClO.

La valeur est aussi dépendante du pH qui est mesuré en parallèle toujours par une mesure potentiométrique tout comme la conductivité. En effet, le pH est généralement neutre autour de 7 mais dans le cas d'une solution saline avec production de chlore libre, le pH de la solution traitée par électrolyse devient plus basique, autour de 8 à 8,5.

Si l'eau entrante est légèrement acide, le pH final avoisine alors les 7,5 à 8, ce qui est la plage recherchée comme il sera indiqué plus avant.

L'étalonnage de ces mesures est effectué par rapport à des solutions standards avec des tampons pH défini, 4 et 7 par exemple et une solution certifiée en conductivité par exemple 12,88 mS/cm, (milli Siemens par cm).

On sait aussi que ces paramètres doivent être corrigés en fonction de la température, ce paramètre est donc enregistré simultanément au débit, les variations de température étant généralement très limitées sur une plage de temps donnée.

On obtient un potentiel redox de l'ordre de 500mV.

Les valeurs de chlore libre et de chlore total sont sensiblement identiques donc la production de chlore gazeux est considérée comme négligeable.

La mesure du chlore total conduit à déterminer la quantité d'acide hypochloreux et d'hypochlorite de sodium.

On constate que la quantité de chlore libre augmente avec la concentration en sel comme montré sur le diagramme de la figure 4 et en fonction de la puissance émise par les plaques 28.

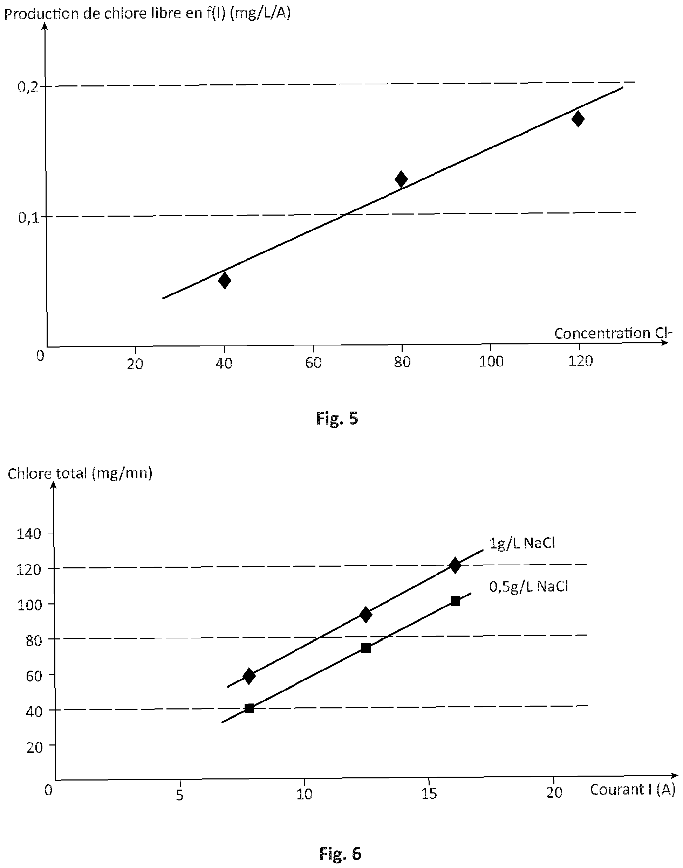

Si l'on considère le graphique de la figure 5 qui représente la production de chlore libre en fonction de la concentration en ions chlorure, on constate que la relation est linéaire. Or c'est l'oxydation des ions chlorure à l'électrode qui conduit à la production de chlore libre donc, dans tous les cas de fonctionnement, le courant imposé est supérieur au courant limite de diffusion des ions chlorure. Le rendement faradique est donc inférieur à 100% mais la production de chlore libre est optimale.

Selon le procédé de la présente invention, il est intéressant de contrôler la présence d'ions chlorure car lorsque l'on ajoute du chlorure de sodium, on ajoute des chlorures : pour 0,1 g/l on ajoute 61 mg/l de chlorure.

Or on constate que la consommation d'ions chlorure est sensiblement égale à la production de chlore total en moles/l, il n'y a donc pas de formation d'autres produits chlorés.

Une mesure de l'ozone produite a montré que les matériels aptes à détecter 0,01 mg/l n'avaient pas détecté d'ozone donc le dispositif n'en produit pas ou du moins en des quantités infinitésimales non détectables de façon aisée et pour l'application du dispositif.

Il en est de même pour le peroxyde d'hydrogène dont la mesure est perturbée par la présence de chlore libre mais néanmoins, on constate la formation de peroxyde d'hydrogène qui favorise la désinfection des canalisations, notamment.

De façon générale, on constate que les variations de rendement de production de chlore libre sont faibles, la production de chlore libre étant sensiblement proportionnelle au débit.

Sur la figure 6, on constate que, par exemple pour de très gros débits, de l'ordre de 13000 l/h, la production de chlore libre est plus importante.

Dans ce cas, il est recherché si la concentration en chlorure de sodium a une influence sur la production de chlore total pour une même intensité.

On constate que le fait de doubler la quantité de sel en passant de 0,5 g/l à 1 g/l ne permet d'atteindre une génération de chlore libre supérieure que de 30%.

## Revendications

1. Dispositif de traitement de l'eau potable par électrolyse, notamment pour l'abreuvage des animaux, comprenant :
- une source (10) d'eau,
- une canalisation (12) d'alimentation issue de cette source (10) reliée à un réservoir tampon ou à un réseau de distribution,
- un débitmètre (14) interposé sur ladite canalisation, agencé pour mesurer un débit de l'eau de la source ;
- une pompe doseuse (16) reliée par un piquage à la canalisation (12) d'alimentation et à un bac (20) de saumure, la pompe doseuse étant en aval du débitmètre (14),
- une chambre (22) d'électrolyse comprenant au moins une cellule (26) comprenant deux plaques (28) l'une (28-1) formant l'anode et l'autre (28-2) formant la cathode, lesdites plaques (28) étant agencées au sein d'une même chambre, et
- une centrale de pilotage C apte à émettre une valeur de consigne de puissance électrique comprise entre 2A et 24A à travers lesdites plaques (28) de la au moins une cellule (26), ladite valeur de consigne étant proportionnelle au débit mesuré par le débitmètre.

2. Dispositif de traitement de l'eau potable selon la revendication 1, **caractérisé en ce que** les plaques (28) sont contenues dans un manchon (24) interposé sur la canalisation (12), ledit manchon comportant des piquages étanches (32-1, 32-2) de passage de câbles (30) électriques alimentant l'un, la au moins une plaque (28-1) formant l'anode et l'autre, la au moins une plaque (28-2) formant la cathode et reliés à la centrale de pilotage C.

3. Procédé de mise en œuvre du dispositif de traitement selon l'une des revendications 1 ou 2, **caractérisé en ce qu'**il comprend la succession des étapes suivantes :
- Mesure de la conductance de l'eau de la source (10),
- Mesure du débit à l'aide du débitmètre (14),
- Ajustement de la conductance par injection de chlorure de sodium dans ladite eau à l'aide de la pompe doseuse (16),
- Passage à travers la chambre (22) d'électrolyse avec émission d'une intensité électrique, proportionnellement au débit d'eau, de façon assurer un traitement d'oxydoréduction.

4. Procédé selon la revendication 3, **caractérisé en ce que** l'ajustement de la conductance est effectué en ajustant la quantité de chlorure de sodium pour maintenir une valeur de conductance à une valeur de consigne.

5. Procédé selon la revendication 3 ou 4, **caractérisé en ce que** l'ajustement de la puissance P par rapport au débit est effectué par variation de l'intensité.

6. Procédé selon l'une quelconque des revendications 3 à 5, **caractérisé en ce que** la quantité de chlorure de sodium ajoutée est comprise entre 0,1 et 1 g/l.

7. Procédé selon la revendication 6, **caractérisé en ce que** la quantité de chlorure de sodium est de 0,5 g/l.

8. Procédé selon l'une quelconque des revendications 3 à 7, **caractérisé en ce que** le chlorure de sodium est injecté sous forme de saumure.

9. Procédé selon l'une quelconque des revendications 3 à 8, **caractérisé en ce que** le procédé prévoit de générer la puissance électrique avec du courant continu haché, avec une fréquence de 1 kHz à ± 10%.

10. Procédé selon l'une quelconque des revendications 3 à 9, **caractérisé en ce que** le courant est haché avec une fréquence de 1kHz.

## Patentansprüche

1. Vorrichtung zur Aufbereitung von Trinkwasser durch Elektrolyse, insbesondere zum Tränken von Tieren, umfassend:
- eine Wasserquelle (10),
- eine Versorgungsleitung (12) von dieser Quelle (10), die mit einem Pufferspeicherbehälter oder einem Verteilungsnetz verbunden ist,
- einen Durchflussmesser (14), der in die Leitung angeordnet ist und eingerichtet ist, um einen Durchfluss des Wassers von der Quelle zu messen;
- eine Dosierpumpe (16), die durch eine Abzweigung mit der Versorgungsleitung (12) und einem Salzlösungsbehälter (20) verbunden ist, wobei die Dosierpumpe dem Durchflussmesser (14) nachgeschaltet ist,
- eine Elektrolysekammer (22), umfassend mindestens eine Zelle (26), die zwei Platten (28) umfasst, wobei eine (28-1) die Anode und die andere (28-2) die Kathode bildet, wobei die Platten (28) innerhalb der gleichen Kammer angeordnet sind, und
- eine Steuerung C, die in der Lage ist, über die Platten (28) der mindestens einen Zelle (26) einen elektrischen Leistungssollwert zwischen 2 A und 24 A abzugeben, wobei der Sollwert proportional zu dem vom Durchflussmesser gemessenen Durchfluss ist.

2. Vorrichtung zur Aufbereitung von Trinkwasser nach Anspruch 1, **dadurch gekennzeichnet, dass** die Platten (28) in einer Manschette (24) enthalten sind, die an der Leitung (12) angeordnet ist, wobei die Manschette dichte Abzweigungen (32-1, 32-2) zum Durchgang elektrischer Kabel (30) umfasst, die einerseits die mindestens eine Platte (28-1), die die Anode bildet, und andererseits die mindestens eine Platte (28-2), die die Kathode bildet, versorgen und mit der Steuerung C verbunden sind.

3. Verfahren zum Anwenden der Vorrichtung zur Aufbereitung nach einem der Ansprüche 1 oder 2, **dadurch gekennzeichnet, dass** es die Abfolge der folgenden Schritte umfasst:
- Messung der Leitfähigkeit des Wassers von der Quelle (10),
- Messung des Durchflusses mit dem Durchflussmesser (14),
- Einstellung der Leitfähigkeit durch Einspritzen von Natriumchlorid in das Wasser unter Verwendung der Dosierpumpe (16),
- Durchgang durch die Elektrolysekammer (22) unter Abgabe einer elektrischen Stromstärkeproportional zum Wasserdurchfluss, um eine Redoxbehandlung zu gewährleisten.

4. Verfahren nach Anspruch 3, **dadurch gekennzeichnet, dass** die Einstellung der Leitfähigkeit durch Einstellen der Menge an Natriumchlorid erfolgt, um einen Leitfähigkeitswert auf einem Sollwert zu halten.

5. Verfahren nach Anspruch 3 oder 4, **dadurch gekennzeichnet, dass** die Einstellung der Leistung P in Bezug auf den Durchfluss durch Variieren der Stromstärkedurchgeführt wird.

6. Verfahren nach einem der Ansprüche 3 bis 5, **dadurch gekennzeichnet, dass** die zugesetzte Menge an Natriumchlorid zwischen 0,1 und 1 g/l liegt.

7. Verfahren nach Anspruch 6, **dadurch gekennzeichnet, dass** die Menge an Natriumchlorid 0,5 g/I beträgt.

8. Verfahren nach einem der Ansprüche 3 bis 7, **dadurch gekennzeichnet, dass** das Natriumchlorid in Form von Salzlösung injiziert wird.

9. Verfahren nach einem der Ansprüche 3 bis 8, **dadurch gekennzeichnet, dass** das Verfahren das Erzeugen der elektrischen Leistung mit zerhacktem Gleichstrom mit einer Frequenz von 1 kHz bei ±10 % vorsieht.

10. Verfahren nach einem der Ansprüche 3 bis 9, **dadurch gekennzeichnet, dass** der Strom mit einer Frequenz von 1 kHz zerhackt wird.

## Claims

1. A device for treating drinking water by electrolysis, in particular for watering animals, comprising:
- a source (10) of water,
- a supply line (12) from this source (10) connected to a buffer tank or to a distribution network,
- a flow meter (14) interposed on said line, arranged to measure a flow rate of the water from the source;
- a metering pump (16) connected by a tapping point to the supply line (12) and to a brine tank (20), the metering pump being downstream of the flow meter (14),
- an electrolysis chamber (22) comprising at least one cell (26) comprising two plates (28), one (28-1) forming the anode and the other (28-2) forming the cathode, said plates (28) being arranged in the same chamber, and
- a control unit C capable of emitting an electrical power setpoint value of between 2 A and 24 A through said plates (28) of the at least one cell (26), said setpoint value being proportional to the flow rate measured by the flow meter.

2. The device for treating drinking water according to claim 1, **characterized in that** the plates (28) are contained in a sleeve (24) interposed on the line (12), said sleeve comprising sealed tapping points (32-1, 32-2) for passing electric wires (30) supplying one, the at least one plate (28-1) forming the anode and the other, the at least one plate (28-2) forming the cathode and which are connected to the control unit C.

3. A method for implementing the treatment device according to either claim 1 or claim 2, **characterized in that** it comprises the succession of the following steps:
- Measuring the conductance of the water from the source (10),
- Measuring the flow rate using the flow meter (14),
- Adjusting the conductance by injecting sodium chloride into said water using the metering pump (16),
- Passing through the electrolysis chamber (22) with emission of an electrical intensity, proportional to the water flow rate, so as to ensure a redox treatment.

4. The method according to claim 3, **characterized in that** the adjustment of the conductance is carried out by adjusting the amount of sodium chloride to maintain a conductance value at a setpoint value.

5. The method according to either claim 3 or claim 4, **characterized in that** the adjustment of the power P with respect to the flow rate is carried out by varying the intensity.

6. The method according to any of claims 3 to 5, **characterized in that** the amount of sodium chloride added is between 0.1 and 1 g/l.

7. The method according to claim 6, **characterized in that** the amount of sodium chloride is 0.5 g/l.

8. The method according to any of claims 3 to 7, **characterized in that** the sodium chloride is injected in the form of brine.

9. The method according to any of claims 3 to 8, **characterized in that** the method provides for generating the electric power with chopped direct current, at a frequency of 1 kHz at ± 10%.

10. The method according to any of claims 3 to 9, **characterized in that** the current is chopped at a frequency of 1 kHz.
